# EUROPEAN PATENT APPLICATION

(11) **EP 0 657 835 A2**
(43) Date of publication of application: **14.06.1995**
(21) Application number: 93310532.2
(22) Date of filing: 23.12.1993
(51) Int. Cl.: G06K 7/10

(54) **Scanner**

(30) Priority: 10.11.1993 US 150498
(71) Applicant: HERMAN MILLER, INC., Zeeland, Michigan 49464-0302 (US)
(72) Inventor: Harris, David P., Grand Rapids, Michigan 49507 (US); Reich, Debra M., Grand Rapids Michigan 49503 (US)
(74) Representative: Cross, Rupert Edward Blount

(57) **Abstract**

A scanning device adapted to be held by a user and placed on a scannable surface and thereupon to generate a signal in response to the scanning device scanning the scannable surface. The scanning device comprises a housing portion with a back surface oriented away from the user, a front surface oriented toward the user, and a bottom surface adapted to rest on the scannable surface. The scanning device also includes a detector located within the housing portion for scanning the scannable surface and for producing the signal in response to the scanner scanning the scannable surface. The scanning device also comprises a support attached to the housing portion and having a shape which ensures that the housing portion will stand in a generally upright or erect position when the bottom surface is parallel to the scanning surface.

## Description

### FIELD OF THE INVENTION

The present invention relates to scanning devices/scanners which scan a planar surface and generate a signal in response to scanning the planar surface. One aspect of the present invention relates to a bar code reader for reading and displaying information corresponding to a bar code.

### BACKGROUND OF THE INVENTION

An important way for storing information is to place the information in the form of a bar code appearing on a label or the surface of an article. A bar code is a coded pattern of a series of bars spaced apart from one another by spaces of variable widths, wherein the bars and the spaces have different light reflecting characteristics. The coded pattern represents various information, ranging from merchandise costs to the identity of a patient's medications.

The information present in the bar code is processed by scanning the code with light from a bar code reading system. The reflected light is then detected by the bar code reading system and electronic circuitry or software is employed to decode the detected signal into a digital representation of the information represented by the bar code.

In such bar code reading systems, a bar code is commonly read by moving a scanner known as a "wand" across the bar code. The "wand" comprises a scanning end for reading the bar code. To scan a bar code the "wand" is grasped by a person's hand and the scanning end is moved across the bar code in a process known as "wanding." Example of wands are disclosed in U.S. Patents Nos. 4,260,979 to Smith; 4,817,185 to Yamaguchi et al.; and 5,184,005 to Ukai et al. The wand is attached to a processor via a cord so that information scanned by the wand from the bar code is sent to the processor for producing information.

One disadvantage of "wand" scanners is that they allow for a multiple number of angular positions for a person's wrist to accomplish scanning the bar code. If the "wand" is held incorrectly and/or is angled at an awkward angle during scanning, a person's wrist will experience stress. Furthermore, if a large number of wanding strokes are taken by a person while the "wand" is held incorrectly or is angled awkwardly, the person may experience discomfort during the bar code reading process.

Another disadvantage of bar code scanners is that the multiple number of angular positions for the scanner reduces the probability of a successful reading of a bar code. Thus, more than one scan of the bar code may be needed to read the bar code.

Accordingly, it is an object of the present invention to provide a scanner, such as a mouse, a digitizer, or a bar code reader, which reduces the chance of producing stress on a person's wrist during scanning or bar code reading.

Another object of the present invention is to provide a scanner or bar code reader which improves the scanning angle between the object being scanned and the detector so that the probability of a successful scan is increased.

### SUMMARY OF THE INVENTION

With the above-mentioned objects in mind, one embodiment of the present invention provides a scanning device adapted to be held by a user and placed on a scannable surface and thereupon to generate a signal in response to the scanning device scanning the scannable surface. The scanning device comprises a housing portion with a back surface oriented away from the user, a front surface oriented toward the user, and a bottom surface adapted to rest on the scannable surface. The scanning device also includes a detector located within the housing portion for scanning the scannable surface and for producing the signal in response to the scanner scanning the scannable surface. The scanning device also comprises a support attached to the housing portion and having a shape which ensures that the housing portion will stand in a generally upright or erect position when the bottom surface is parallel to he scanning surface.

In another embodiment the scanning device comprises a housing portion with a front surface oriented away from the user, a back surface oriented toward the user, and a surface adapted to lie along the scanning surface. The bottom surface includes a detector located within the housing portion for producing the signal in response to scanning the scanning surface. The scanner further includes a leg portion having a first end and a second end, wherein the first end is attached to the housing portion and the second end contacts the surface to support the housing portion in a generally upright position.

Another embodiment concerns a scanning device adapted to be held between the thumb and fingers of a user and placed on a planar surface containing a scannable image and thereupon to generate a signal in response to scanning the scannable image. The scanning device comprises a housing portion with a front surface oriented away from the user and adapted to be contacted by the fingers of the user, a back surface oriented toward said user, and a generally flat bottom surface adapted to rest on said planar surface, said bottom surface including a window. The scanner located within the housing portion for scanning the scannable image through the window when the bottom surface is placed on the planar surface and for producing said signal in response to the housing scanning the planar surface. The scanner further includes a leg portion having a first end and a second end and a thumb portion adapted to be contacted by the thumb of the user, wherein the first end is attached to the housing portion and the second end contacts the planar surface to support the housing portion in a generally upright position.

### DETAILED DESCRIPTION OF DRAWINGS

FIG. 1 is a perspective view of an embodiment of a bar code reader in a reading position according to the present invention;
FIG. 2 is a perspective view of the bar code reader of FIG. 1 in a parked position;
FIG. 3 is a perspective view of a second embodiment of a bar code reader according to the present invention;
FIG. 4 is a cross-sectional view of the bar code reader of FIG. 1;
FIG. 5 is a back view of the bar code reader of FIG. 1;
FIG. 6 is a front view of the bar code reader of FIG. 1;
FIG. 7 is a schematic diagram of an embodiment of a bar code scanner used in the bar code readers of FIGS. 1-6;
FIG. 8 is an exploded view of a processing station to be used with the bar code reader of FIGS. 1-6;
FIG. 9 is a cross-sectional side view of the processing station of FIG. 8; and
FIG. 10 is a rear view of the processing station of FIG. 8.

### DETAILED DESCRIPTION OF EMBODIMENTS

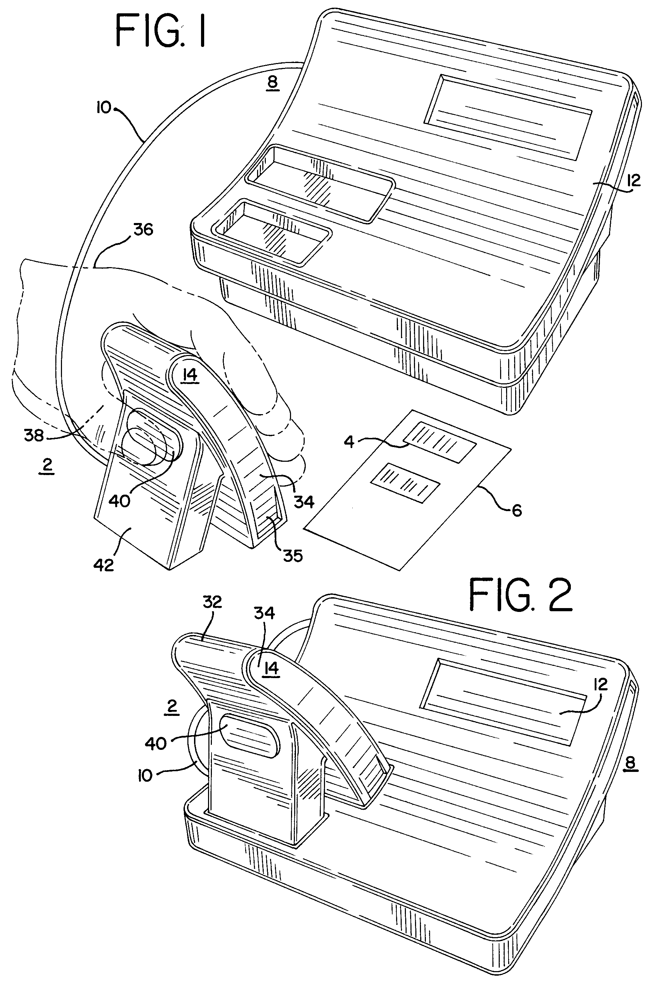

The present invention is best understood upon viewing the embodiments illustrated in FIGS. 1-10. FIG. 1 illustrates a bar code reader 2 for scanning a bar code 4. Bar code 4 may be located on a planar surface, such as sheet of paper 6. The bar code reader 2 is attached to an electrical input 7 in power port 9 located at the rear 11 of a bar code reader station or processing station 8 via transmission cord 10 as shown in FIGS. 1, 2, and 10.

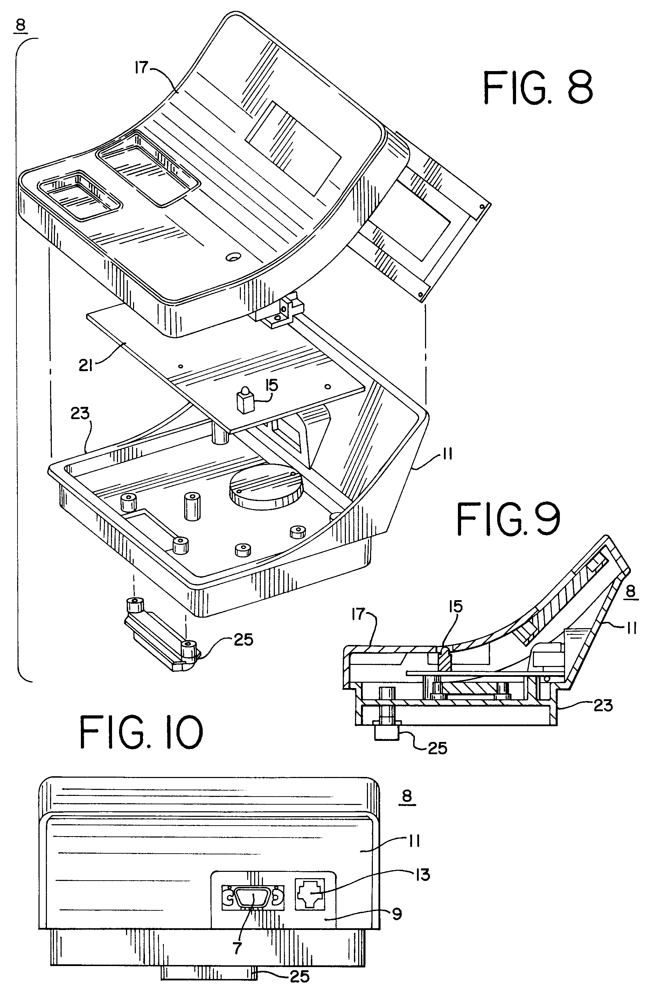

Processing station 8 and bar code reader 2 may be powered by batteries present in processing station 8 or by a power cord connected between the power outlet 13 of processing station 8 and an electrical outlet. In the case of battery use, a light 15 is located on the front panel 17 of processing station 8 as shown in FIGS. 8-9 and which is lit when the battery power is low. Front panel 17 includes depressions 19 to contain the bar code reader when it is not being used to scan. Light 15 is supported on a middle plate 21 which is located between the front panel 17 and bottom support member 23, as shown in FIGS. 8 and 9. In one embodiment, bottom support member 23 includes a rectangular-like support 25 to attach the processing station 8 structurally and electrically to a structure, such as a medication cart.

When bar code 4 is scanned by bar code reader 2, a signal is generated which is sent to the processing station 8. Processing station 8 then reads the information and displays information on a liquid crystal display screen 12 confirming a scan or directing the user through a scanner procedure displayed on a liquid crystal display screen 12. Information confirming a scan may include the display of: (1) the type of medication disbursed; (2) the patient which received the medication; and (3) the person disbursing the medication to the patient. Information directing a user through the scanner procedure may include the display of directions including: (1) scanning the patient's bar code; (2) scanning the patient's bar code which received the medication; and (3) scanning the bar code of the person disbursing the medication to the patient. The information confirming a scan or directing a user through the scanner procedure may be in the form of either words, numerals, or a combination thereof. The display 12 may also inform a user when a delay is occurring due to a data exchange.

FIGS. 1, 2, and 4-6 disclose an embodiment of a bar code reader 2 according to the present invention. The bar code reader 2 comprises a housing 14 having a scanning surface 16 parallel to and contacting the sheet 6. Scanning surface 16 comprises a window which can be either an opening or an opening covered by pane made of a material transparent to light such as glass, plexi-glass or other clear plastic. Housing 14 is made of a structurally sound and light material, such as plastic. Housing 14 further comprises a cavity 18 extending from the scanning surface 16 to an electronic scanner 20.

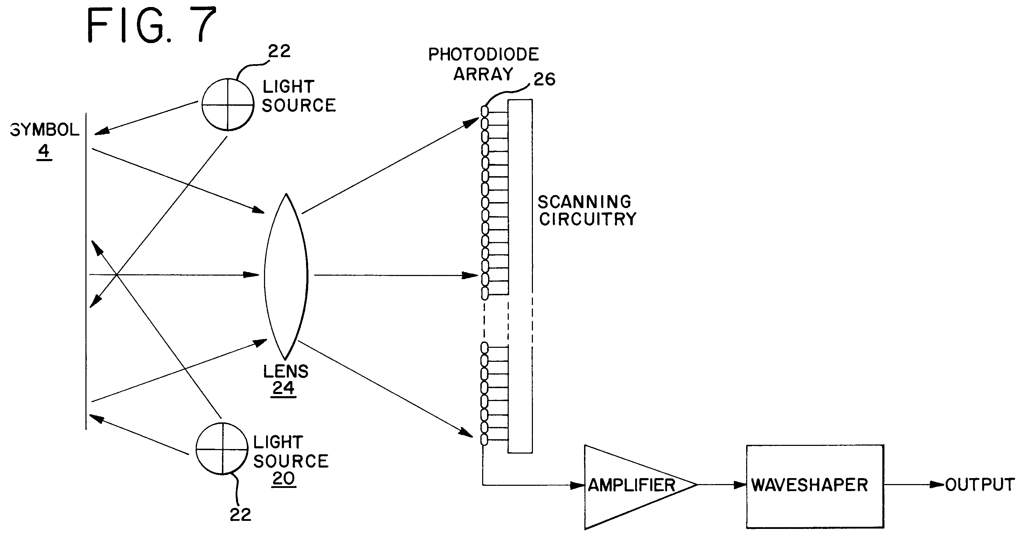

The electronics of scanner 20 is schematically shown in FIG. 7 and is described on pages 80-81 of the "Bar Code Book" by Roger C. Palmer (Helmers Publishing, 1989), the contents of these pages 80-81 are incorporated herein by reference. A further example of such a scanner is the Compact CCD Module manufactured by Opticon, located at Orangeburg, New York. Electronic scanner 20 comprises a light source 22 which illuminates the bar code 4. The illuminated bar code 4 then reflects light which is received by a lens 24 located in cavity 18 and directed to a light detector 26, such as a charge-coupled photodiode array. Light detector 26 may be a linear array or a two-dimensional array contained on a detector plane which is oriented at an angle beta ranging from approximately 65° to approximately 85° with respect to the scanning surface 16. The angle beta may range from approximately 70° to approximately 80° with respect to the scanning surface 16, most preferably 75°. Such an orientation provides for improved resolution of the detected light. The detected light is then automatically scanned and processed by such well known electronic circuits as scanning circuitry, amplifiers, and waveshapers. The detected reflected light generates an electrical signal which is sent to processing station 8.

Housing 12 and cavity 18 are each curved so as to define a convex-like shape as seen in FIGS. 1-6. A surface or space is defined to be "convex" when its center of curvature lies nearest the user's thumb 38 instead of the user's other four fingers when they engage the bar code reader 2, as shown in FIG. 1. The housing 12 comprises a convex front surface 28 oriented toward the user and having a radius of curvature of ranging from approximately 3.5" to approximately 4.5", most preferably approximately 5.75". Housing 12 further comprises a convex back surface 30 oriented away from the user and having a radius of curvature ranging from approximately 5" to approximately 6", most preferably, approximately 6.75". Front surface 28 and back surface 30 each have a tapered shape such that their width ranges from approximately 2.5" to approximately 3.5" at the scanning surface 16 and ranging from approximately 1.25" to approximately 2.25" at the curved top 32 of the housing 14. The width at the scanning surface is preferably approximately 1" and the width at the curved top 32 is preferably approximately 0.68". Top 32 has a radius of curvature ranging from approximately 0.24" to approximately 0.44", most preferably 0.34", and is vertically located at a distance ranging from approximately 3.3" to approximately 4.3" above the scanning surface 16, most preferably 3.4". Front surface 28 and back surface 30 are connected via side walls 34 which have a width ranging from approximately 0.58" to approximately 1.18". Side walls 34 may be indented from the back and front walls so as to form buttress support legs 35 to provide further support for the bar code reader 2. Thus, the housing 14 has a shape such that when the scanning surface 16 is placed over the bar code 4 the housing 14 only makes contact with the sheet at the scanning surface 16.

Furthermore, cavity 18 also has a curved shape parallel with the front and back surfaces of the housing 14. However, the side balls of the cavity are parallel with each other as well. It is understood that there are many choices for the shape of cavity 18 that can be selected so that the light entering the scanning surface 16 is directed to the light detector 26. In the embodiment of FIGS. 1-6, the cross-section of the cavity 18 at the scanning surface 16 is in the shape of the bar code 4 to be scanned, namely a rectangle. Thus, the housing 14 has an opening approximately matching the shape of the bar code.

Furthermore, scanning surface 16 has a rectangular shape as the bar code and is attached to housing 14 by placing scanning surface 16 over the opening of the housing and using such well known attachment methods as gluing.

The scanning of a bar code 4 is accomplished by first placing one's right or left hand 36 onto the housing 14 in a neutral manner as shown in FIG. 2. The neutral placement of the hand 36 and wrist involves placement of the thumb 38 substantially parallel to the sheet 6 by aligning the thumb 38 along the longitudinal axis of protuberance 40 located on leg 42. Next one or more of the other four fingers 44 are placed on the back surface 30. This neutral hand and wrist position may provide a lessening in the stress one's hand is subjected to in other prior art bar coding arrangements.

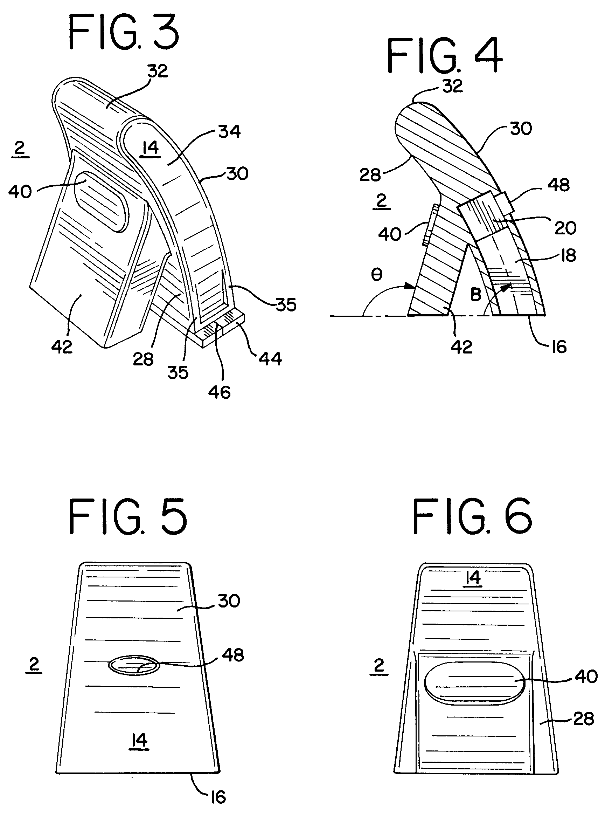

Once the hand 36 is in the neutral position, the housing 14 is moved along sheet 6 until the scanning surface 16 is aligned directly on top of a desired bar code 4. To provide improved alignment, the housing 14 and scanning surface 16 may further comprise alignment devices as shown in FIG. 3. The alignment devices of FIG. 3 comprise extending the scanning surface 16 lengthwise so that alignment portions 44 extend beyond the left and right side walls 34 of the housing 14 by approximately 3/16". One or more alignment portions 44 comprise a marking 46 which is perpendicular to the side wall 34 and is located midway along the width of alignment portion 44. Proper alignment with a bar code 4 is confirmed when marking 46 is aligned with a linear marker (not shown) located on sheet 6.

Once the bar code reader 2 and the bar code 4 are aligned, the bar code 4 is scanned by pressing activation button 48. Button 48 is electrically connected to the scanner of FIG. 7 in a well known manner such that its activation results in the activation of light sources 22 and the scanning circuitry. Note that it is possible to use other well known scanning detectors such that one is required to manually move the scanning surface 16 across the bar code 4 to provide the required scanning.

To ensure that the scanning surface is parallel to the sheet and the bar code, a housing support, such as leg portion 42, is attached to housing 14. The housing support comprises any structure which ensures that the bar code reader housing will stand generally upright or erect when the scanning surface 16 is parallel to and resting on sheet 6. Thus, the housing support may have many possible configurations.

In one embodiment, the housing support comprises leg portion 42 which makes contact with the sheet 6 and is positioned at an angle theta ranging from approximately 100° to approximately 130° with respect to the sheet 6. The angle theta may vary from approximately 110° to approximately 120°, most preferably 115°. Leg 42 has a thickness ranging from approximately 0.5" to 1", most preferably 0.75". Leg 42 has a length ranging from approximately 1.25" to approximately 2.00", most preferably 1.75".

Though the embodiment of the scanner described above and shown in FIGS. 1-7 is used for scanning a bar code, it is possible to employ the same shape of the bar code scanner in other applications, such as a digitizer and a mouse. Such a scanner may provide a reduced chance of producing stress on a person's wrist during the act of scanning.

In the case of a mouse, the shape of the mouse is the same as shown in FIGS. 1-7 and described previously. The window is replaced a bottom surface with a well known device for scanning the movement of the housing portion along the planar surface. As with the bar code reader, the mouse comprises a housing portion with a front surface oriented away from the user and a back surface oriented toward the user. The mouse further includes a detector located within the housing portion for detecting movement of the housing portion along the planar surface. The detector produces the signal in response to the housing scanning moving with respect to the planar surface. The mouse further including a leg portion having a first end and a second end, wherein the first end is attached to the housing portion and the second end contacts the planar surface to support the housing portion in a generally upright position.

While the invention has been described with relation to certain presently preferred embodiments, those with skill in this art will recognize other modifications of the invention which will still fall within the scope of the invention, as expressed in the accompanying claims.

## Claims

1. A scanning device adapted to be held by a user and placed on a scannable surface and thereupon to generate a signal in response to said scanning device scanning said scannable surface, said scanning device comprising:
a housing portion with a back surface oriented away from the user, a front surface oriented toward the user, and a bottom surface adapted to rest on said scannable surface;
a detector located within said housing portion for scanning said scannable surface and for producing said signal in response to said scanner scanning said scannable surface; and
a support attached to said housing portion and having a shape which ensures that said housing portion will stand in a generally upright or erect position when said bottom surface is parallel to said scanning surface.

2. The scanning device of claim 1, wherein said support is attached to said front surface of said housing portion.

3. The scanning device of claim 1, wherein said support is positioned at an angle ranging from approximately 100° to approximately 130° with respect to said scannable surface.

4. The scanning device of any preceding claim, wherein said support is positioned at an angle ranging from approximately 110° to approximately 120° with respect to said scannable surface.

5. The scanning device of any preceding claim, wherein said support is positioned at an angle of approximately 115° with respect to said scannable surface.

6. A scanning device adapted to be held by a user and placed on a scannable surface and thereupon to generate a signal in response to said scanning device scanning said scannable surface, said scanning device comprising:
a housing portion with a front surface oriented away from the user, a back surface oriented toward the user, and a bottom surface adapted to rest on said scannable surface;
a detector located within said housing portion for scanning said scannable surface and for producing said signal in response to said scanner scanning said scannable surface; and
a leg portion having a first end and a second end, wherein said first end is attached to said housing portion and said second end contacts said scannable surface to support said housing portion in a generally upright position.

7. The scanning device of claim 6, wherein said leg portion is positioned at an angle ranging from approximately 100° to approximately 130° with respect to said scannable surface.

8. The scanning device of claim 6 or claim 7, wherein said leg portion is positioned at an angle ranging from approximately 110° to approximately 120° with respect to said scannable surface.

9. The scanning device of any of claims 6 to 8, wherein said leg portion is positioned at an angle of approximately 115° with respect to said scannable surface.

10. A scanning device adapted to be held by a user and placed on a planar surface containing a scannable image and thereupon to generate a signal in response to scanning the scannable image, said scanning device comprising:
a housing portion with a back surface oriented away from the user, a front surface oriented toward the user, and a generally flat bottom surface adapted to rest on said planar surface, said bottom surface including a window;
a scanner located within said housing portion for scanning said scannable image through said window when said bottom surface is placed on said planar surface; and for producing said signal in response to said housing scanning said planar surface;
a leg portion having a first end and a second end, wherein said first end is attached to said housing portion and said second end contacts said planar surface to support said housing portion in a generally upright position.

11. The scanning device of claim 6 or claim 10, wherein said first end of said leg portion is attached to said front surface of said housing portion.

12. The scanning device of claim 10, wherein said first end of said leg portion is attached approximately at a midpoint of said back surface of said housing portion.

13. The scanning device of claim 10, wherein said window comprises a transparent pane having a guide to assist the user in aligning said window over said scannable image.

14. A scanning device adapted to be held between the thumb and fingers of a user and placed on a planar surface containing a scannable image and thereupon to generate a signal in response to scanning the scannable image, said scanning device comprising:
a housing portion with a back surface oriented away from the user and adapted to be contacted by the fingers of the user, a front surface oriented toward said user, and a generally flat bottom surface adapted to rest on said planar surface, said bottom surface including a window;
a scanner located within said housing portion for scanning said scannable image through said window when said bottom surface is placed on said planar surface; and for producing said signal in response to said housing scanning said planar surface; and
a leg portion having a first end and a second end and a thumb portion adapted to be contacted by said thumb of said user, wherein said first end is attached to said housing portion and said second end contacts said planar surface to support said housing portion in a generally upright position.

15. The scanning device of claim 14, wherein said thumb portion is raised from said leg portion.

16. The scanning device of claim 10 or claim 14, wherein said second end of said leg portion and said bottom surface of said housing portion are spaced apart from one another.

17. The scanning device of claim 10 or claim 14, wherein said scanner comprises a detector contained in a detector plane which is oriented at an angle ranging from approximately 65° to approximately 85° with respect to said planar surface.

18. The scanning device of claim 17, wherein said scanner comprises a detector contained in a detector plane which is oriented at an angle ranging from approximately 70° to approximately 80° with respect to said planar surface.

19. The scanning device of claim 10 or claim 14, comprising a guide attached to said housing portion to assist the user in aligning the window over the scannable image.

20. The scanning device of claim 19, wherein said guide comprises a line to cooperate with indicia on said planar surface so as to align said window over said scannable image.

21. A scanning device adapted to be held by a user and placed on a surface and thereupon to generate a signal in response to moving said scanning device along said surface, said scanning device comprising:
a housing portion with a back surface oriented away from the user, a front surface oriented toward the user, and a bottom surface adapted to move along said surface;
a detector located within said housing portion for detecting movement of said housing portion along said planar surface and for producing said signal in response to said housing moving with respect to said planar surface;
a leg portion having a first end and a second end, wherein said first end is attached to said housing portion and said second end contacts said planar surface to support said housing portion in a generally upright position.

22. The scanning device of any of claims 1, 6, 10 or 21, wherein said front surface comprises a convex-like shape.

23. The scanning device of any of claims 1,6,10,21 or 22, wherein said back surface comprises a convex-like shape.

24. The scanning device of any of claims 14,22 or 23, wherein said front surface has a radius of curvature of approximately 3.5" to approximately 4.5".

25. The scanning device of any of claims 14, 23 or 24, wherein said back surface has a radius of curvature ranging from approximately 5" to approximately 6".

26. The scanning device of claim 21, wherein said first end of said leg portion is attached to said back surface of said housing portion.

27. The scanning device of any of claims 10,14 or 21, wherein said leg portion is positioned at an angle ranging from approximately 100° to approximately 130° with respect to said planar surface.

28. The scanning device of any of claims 10, 14, 21 or 27, wherein said leg portion is positioned at an angle ranging from approximately 110° to approximately 120° with respect to said planar surface.

29. The scanning device of any of claims 10,14,21,27 or 28, wherein said leg portion is positioned at an angle of approximately 115° with respect to said planar surface.
